# EUROPEAN PATENT APPLICATION

(11) **EP 4 442 667 A1**
(43) Date of publication of application: **09.10.2024**
(21) Application number: 23167051.4
(22) Date of filing: 06.04.2023
(51) Int. Cl.: C04B 28/04, C04B 20/04, C04B 20/02

(54) **COMPOSITE CEMENT COMPRISING A POZZOLAN MADE FROM QUARRY DUST**

(71) Applicant: Heidelberg Materials AG, 69120 Heidelberg (DE)
(72) Inventor: BOLTE, Gerd, 69120 Heidelberg (DE); DIENEMANN, Wolfgang, 69120 Heidelberg (DE)
(74) Representative: Zellentin & Partner mbB Patentanwälte

(57) **Abstract**

Composite cement comprising a Portland cement, calcium carbonate and an aluminosilicate glass, wherein the aluminosilicate glass is obtained by melting an aluminosilicate quarry dust in a furnace at a temperature from 1000 to 1800 °C with subsequent rapid quenching as well as method for manufacturing the composite cement comprising blending Portland cement, calcium carbonate and an aluminosilicate glass made by melting an aluminosilicate quarry dust in a furnace at a temperature from 1000 to 1800 °C with subsequent rapid quenching.

## Description

The present invention relates to composite cements comprising Portland cement, calcium carbonate, and an aluminosilicate glass which is manufactured from an aluminosilicate quarry dust, and to a method for manufacturing the composite cement.

Cement industry is struggling with the high CO₂ emissions related to the production of cement clinker. Since the demand for cement is increasing worldwide, the emission will further increase. Consequently, there is a demand for further reduction of the emission associated with cement production. The easiest way to limit this environmental footprint is to produce composite cements or to increase the usage of supplementary cementitious material during the concrete production. Unfortunately, the increase of the proportion of the composite cements in the product portfolio is limited by the availability of high quality supplementary cementitious material, i.e., reactive materials resulting in appreciable strength evolution. The most often used ones are granulated blast furnace slag (abbreviated GBS or GBFS) and fly ash. Since they are industrial by-products from quality iron production and coal combustion, respectively, a declining availability as a consequence of the decarbonation of the industry is expected. Alternatives are needed.

EP 2 168 930 A1 and ES 2 592 953 A1 describe a manufacturing of cementitious material by melting waste at high temperature. According to EP 2 168 930 A1 the chemical composition of the raw materials must be such that a content of calcium, silicon, magnesium, and aluminum expressed as oxides is greater than 70 % and the mass ratio (CaO+MgO)/SiO₂ greater than 0.9, optimally from 1.3 to 1.6, the content of Al₂O₃ greater than 2 %, the Na₂O equivalent from 0 - 8 % and the content of SOs from 0-20%. ES 2 592 953 A1 requires that the product conforms to the requirement in the standards, especially EN 197-1 and EN 15167-1. This means inter alia a content of calcium, silicon and magnesium oxides is greater than 66 % and the mass ratio (CaO+MgO)/SiO₂ greater than 1. These requirements cause high efforts.

Not prior published application PCT/EP2022/086438 describes a method for producing a supplementary cementitious material from a starting material comprising hydrated cement and having a mass ratio (CaO+MgO)/SiO₂ < 0.9 and less than 60 wt.-% amorphous phases, e.g., concrete waste, by melting the starting material in a furnace at a temperature between 1000 °C to 1800 °C and subsequent rapid cooling of the melted mixture.

Further, WO 2020/264516 A1, WO 2022/140154 A1, and WO 2022/140155 A1 describe a melting of aluminosilicate materials in a kiln to provide a cementitious reagent. The reagent is said to be useful as supplementary cementitious material, as component in blended cements and as aluminosilicate in alkali activated binders. The compressive strength levels reached in composite cements are around 80 % of the control Portland cement at 20 and 40 % replacement. To increase especially the early strength, metakaolin and an alkali sulfate activator are added to composite cements from Portland cement and the reagent in WO 2022/140154 A1. However, the combination with metakaolin requires an availability of high-quality clay deposits as well as a further manufacturing line to calcine the clay. The proposed approach is promising but not sufficient, therefore.

Thus, there is still a need for providing reactive supplementary cementitious materials for cements with reduced CO₂ emission.

Surprisingly it was now found that an aluminosilicate glass produced by melting and rapid cooling of quarry dust shows strong pozzolanic properties in ternary composite cements containing Portland cement, calcium carbonate and the aluminosilicate glass, allowing a high clinker replacement factor while maintaining high strengths.

The above object is thus solved by a composite cement comprising Portland cement, calcium carbonate and an aluminosilicate glass obtained from melting an aluminosilicate quarry dust in a furnace at a temperature from 1000 to 1800 °C with subsequent quenching. The object is also achieved by a method for manufacturing a composite cement comprising the steps
- providing Portland cement,
- providing calcium carbonate,
- manufacturing an aluminosilicate glass by melting an aluminosilicate quarry dust in a furnace at a temperature from 1000 to 1800 °C with subsequent rapid quenching,
- blending the Portland cement with the calcium carbonate and the aluminosilicate glass.

Herein, the term "reactive" shall mean a hydraulic reactivity unless specified otherwise. Hydraulic reactivity designates the reaction of a compound with water or other water containing compounds to form hydrated phases including a reaction of two or more compounds occurring simultaneously.

Clinker designates a sinter product obtained by burning a raw material at elevated temperature and containing at least one hydraulic phase. Burning means a change of one or more property of the starting material such as chemistry, crystallinity, phase composition, spatial arrangement and bonds of lattice atoms which is brought about by a supply of thermal energy. The starting material may be a single material, but usually it is a mixture. The starting material is typically finely ground and then designated as raw meal. The starting material may contain mineralizers, which are substances decreasing the temperature necessary for melting and/or act as fluxes and/or enhance clinker formation e.g., by forming solid solutions or stabilization of phases. Mineralizers can be part of the starting material components or be added as separate component.

Cement designates a material that, after mixing with an aqueous liquid to form a paste, is able to develop mechanical strength by hydraulic reaction. Composite cement means a mixture containing cement and at least one supplementary cementitious material. A cement or composite cement is usually used adding water or another liquid and mostly also aggregate. Typically, admixtures and/or additives are added to the cement or composite cement and/or the paste.

A supplementary cementitious material (SCM) is defined as a pozzolanic and/or latent hydraulic material useful to replace a part of the clinker in a binder. Latent hydraulic materials have a composition that allows hydraulic reaction upon contact with water, wherein typically an activator is needed to enable hardening within technically feasible times. Activator means a substance that accelerates the hardening of latent hydraulic materials. It can be an addition like sulfate or calcium (hydr)oxide and/or products of the hydraulic reaction of the ground clinker, e.g., calcium silicates liberate calcium hydroxide during hardening. Pozzolanic materials are characterized by a content of reactive silica and/or alumina which form strength providing calcium silicate hydrates, calcium aluminate hydrates and calcium aluminate silicate hydrates, respectively, during hydration of the clinker together with the calcium hydroxides liberated. In practice, the limit between latent hydraulic and pozzolanic materials is not well defined, for example, fly ashes can be both latent hydraulic and pozzolanic, depending on their calcium oxide content. Consequently, the term SCM designates both latent hydraulic as well as pozzolanic materials. However, not reactive, or only slightly reactive materials like limestone that substantially do not take part in the hydraulic reactivity have to be clearly differentiated from SCM, with which they are sometimes summarized as mineral additions.

Hydraulically hardening building material means a wet mixture that is able to harden hydraulically, and comprises a cement or binder as well as optionally any other addition contained to adjust the properties like final strength, processability of the wet mixture and strength development properties, to the intended use of the building material. For example, a concrete used to build a bridge needs other properties than a screed for casting a floor or a mortar for laying bricks.

Building structure denotes the hardened building material, e.g., a precast concrete element or a floor or a bridge part from cast in place concrete.

According to the present invention, it was surprisingly possible to make composite cements comprising Portland cement, calcium carbonate and an aluminosilicate glass obtained from melting aluminosilicate quarry dust wherein the composite cement shows a reactivity comparable to that of Ordinary Portland cement (abbreviated OPC), the most common cement. Specifically, the composite cement according to the present invention shows a strength development similar to that of OPC as well as analogous workability and properties of the hardened building structure.

One component of the composite cement (made) according to the present invention are molten aluminosilicate quarry dusts, i.e., an aluminosilicate glass constituting a pozzolan. Quarry dusts are a problematic by-product that has not found a satisfactory use so far. The above-mentioned prior art proposing a melting thereof to manufacture pozzolans constitutes a promising approach. But as explained, strength development of composite cements with only the melted aluminosilicate material is unsatisfactory. The proposed combination with metakaolin and an alkali sulfate activator is not available everywhere (necessary kaolin source) as well as laborious (additional calcination line). According to the invention, the combination of melted quarry dust with calcium carbonate provides an easy and everywhere available solution. Each clinker manufacturing site has a limestone quarry providing limestone which is the most preferred calcium carbonate. Limestone does not need any calcination, contrary to making metakaolin from clay.

The quarry dust used according to the invention is quarry dust from mining aluminosilicate rock, preferably but not limited to granitic rocks, basaltic rocks, and feldspar. Especially useful quarry dusts are the fine portions from aggregate production and quarry overburden of aggregate quarries processing the mentioned igneous rocks. Typically, the processing of crushed stone for use as aggregate comprises blasting, primary and secondary crushing, washing, screening, and stockpiling operations. Quarry dust is usually produced during crushing and washing operations as screenings, settling pond fines, and baghouse fines. Mixtures of dusts from several quarries or from different sources within one quarry or from one source in one quarry and accumulated over time are possible. Mixtures might be preferred to optimize the composition and/or to ensure a more uniform composition over time.

Screenings refers to the finer fraction of crushed stone that accumulates after primary and secondary crushing and separation on a sieve. Thereby, coarse aggregate with sizes of at least 2 or 4 or 8 mm is separated from smaller particles. Optionally, another sieving separates the obtained fine particles into fine aggregate (i.e., sand) and the very fine particles that normally have sizes below 0.63 mm. Other size limits are of course also possible, for example but not limited to 1 mm or 0.5 mm or 100 µm or 50 µm. The size distribution, particle shape, and other physical properties differ somewhat from one quarry to another, depending on the geological source of the rock quarried, the crushing equipment used, and the method used for aggregate separation. Thus, screenings are either the fine, sandy material with some silt particles or only the very fine particles. Some weathered rock or overburden material may be present in the screenings.

Settling pond fines refers to the fines obtained from washing crushed stone aggregate, i.e., sand and gravel. During production, the size range of typically greater than 0.63 mm from washing may be recovered e.g., by means of a sand screw classifier. The remainder of the fines in the overflow is discharged to a series of sequential settling ponds or basins, where they settle by gravity, sometimes with the help of flocculating polymers. Pond fines, when initially recovered from the pond, normally consist of a low solids content, fine-grained slurry, usually with 90 - 95 wt.-% of the particles finer than 150 µm and 80 wt.-% or more finer than 75 µm. For melting, the settling pond fines are separated from the water, preferably also dried. Drying can also take place during heating up for melting.

Baghouse fines are produced in quarries that operate as dry plants because of dry climatic conditions or a lack of market for washed aggregate products. Dry plant operation requires the use of dust collection systems, such as cyclones and baghouses, to capture dusts generated during crushing operations. These dusts are referred to as baghouse fines. Although particle sizes may vary with fines from different types of stone, the range in particle size is from below 100 µm down to 1 µm or finer.

US 2020/0331805 A1 proposes a use of these materials as well as many others in ternary composite cements with a very strictly adjusted particle size distribution of the composite cement components. That melting could render the quarry dusts useful is not mentioned nor can it be suspected. Compared to the waste comprising hydrated cement used in PCT/EP2022/086438, quarry dusts do not need energy or at least much less energy than concrete demolition waste to provide the material in a fineness suitable for melting. Specifically, concrete demolition waste has sizes in the cm range needing a high amount of grinding energy to obtain a powder suitable for melting in a furnace and quenching, whereas quarry dust is often fine enough as is or needs only a minor reduction of particle size. Further, the melt processing of quarry dust does not compete with a possible carbonation common for recycled concrete fines that is able to sequester carbon dioxide instead of generating more of it for heating.

The melting and quenching steps foreseen according to the invention are preferably carried out as described in WO 2020/264516 A1, WO 2022/140154 A1, and WO 2022/140155 A1. Thus, an aluminosilicate quarry dust is provided. Typically, its chemical composition is analyzed and evaluated. The feedstock may be analyzed by any suitable quantitative or semi-quantitative methods such as XRF, XRD, LIBS, EDS, wet chemical analysis, and various other existing methods to determine the elemental composition. If the composition is not acceptable, it can and preferably will be corrected, e.g., through an addition of a composition adjustment material or through sorting and discarding undesirable material fractions. As mentioned before, dusts from two or more sources can be mixed, including mixing dusts from two or more quarries, different kinds of dusts from one quarry or different quarries like screenings with settling pond fines, and mixing dusts from one quarry in an intermediate storage to compensate for changes in composition over time.

The term aluminosilicate quarry dust designates a material comprising aluminum or aluminum and iron, and silicon dioxide. An aluminosilicate quarry dust used according to the present invention is preferably in the form of a crystalline solid (e.g., at least 50 wt.-%, or at least 60 wt.-%, or at least 70 wt.-%, or at least 80 wt.-%, or at least 90 wt.-%, or 100 wt.-% crystalline solid). The combined content of Al₂O₃ and SiO₂ with respect to the total aluminosilicate quarry dust weight is usually at least 50 wt.-% or at least 55 wt.-% or at least 60 wt.-% or at least 65 wt.-% or at least 70 wt.-% or at least 75 wt.-% or at least 80 wt.-% or at least 85 wt.-%. In some embodiments, the aluminosilicate quarry dust comprises at least 1 wt.-% or at least 3 wt.-% or at least 4 wt.-% or at least 5 wt.-% or at least 6 wt.-% or at least 7 wt.-% or at least 8 wt.-% or at least 10 wt.-% or at least
12 wt.-% or at least 15 wt.-% or at least 20 wt.-% Na₂O and/or K₂O. The sum of CaO and MgO is preferably not more than 20 wt.-% or not more than 15 wt.-% or not more than 10 wt.-% or not more than 8 wt.-% or not more than 7 wt.-%. In some instances, the aluminosilicate quarry dusts are heterogeneous, and the glassy particles produced are more homogeneous, i.e., fall within a new intermediate formulation range.

If desired, a fluxing material may be added to the aluminosilicate quarry dust in order to lower its melting point and/or to induce depolymerization of the liquid. The fluxing material may be mixed with the quarry dust prior to heating/melting or during the heating/melting. Common fluxing materials that may induce depolymerization in melts, and/or lower melting temperature includes CaF₂, CaCOs, waste glass, glass cullet, glass frit, alkali-bearing minerals (e.g., feldspars, zeolites, clays, and feldspathoid minerals), borate salts, halogen compounds (fluoride and chloride bearing salts) and calcium salts.

If the aluminosilicate quarry dust contains particles that are considered too coarse, a crushing and/or grinding step may be carried out using any suitable method or apparatus including, but not limited to, a ball mill, a roller mill, and a vertical roller mill. Usually, particles sizes with a D₉₀ ≤ 500 µm or D₉₀ ≤ 200 µm or D₉₀ ≤ 100 µm or D₉₀ ≤ 63 µm or D₉₀ ≤ 40 µm are suitable. Particles sizes below 1 mm are determined here by laser granulometry with a MasterSizer (Malvern Panalytical Ltd., GB) according to the Fraunhofer theory, in isopropanol dispersion, wherein mentioned D₉₀, D₅₀ and D₁₀ values are volume based.

The aluminosilicate quarry dust is heated, and individual particles or particle agglomerates are melted into a liquid in suspension. Heating is carried out to reach a heating temperature above a liquid phase temperature to obtain a liquid, for instance at about 1000 - 1800 °C, or about 1400 - 1700 °C. Any suitable method or apparatus may be used for the heating and for obtaining the liquid including, but not limited to, in-flight melting (i.e., suspension melting). This may be achieved by using an in-flight melting apparatus equipped with, for instance, one or more plasma torches, oxy-fuel burners, air-fuel burners, biomass burners, and/or a solar concentrating furnace. Typically, a furnace temperature of 1000 - 1800 °C is needed, and most typically 1400 - 1700 °C, to rapidly obtain the desired liquid phase particles in suspension. Preferably, the device is selected such that melting is as fast as possible.

Next the liquid particles in suspension are quenched to obtain the aluminosilicate glass as micro-spheroidal glassy particles. The quenching step comprises reducing the temperature of the liquid below the glass transition temperature, for instance at about 500°C or lower, or preferably below about 200°C or lower. The quenching is done rapidly, i.e., the temperature is reduced at a rate of about 10² K/sec to 10⁶ K/sec, preferably at a rate of > 10^{3.5} K/sec. Any suitable method may be used for the quenching including, but not limited to, contacting the molten material with a sufficient stream of adequately cool air, with steam, or with water to produce a non-crystalline solid. The XRD amorphous content should be at least 66 wt.-%, preferably at least 80 wt.-%, most preferred at least 90 wt.-%, with respect to the total pozzolan weight.

If desired, the aluminosilicate glass is crushed and/or ground (partially or entirely) to reduce particle size and/or to optimize reactivity. Obtaining a finer powder may be useful for increasing surface area and providing for faster reaction rates. Those skilled in the art are able to determine the size of the particles desired for a particular use, taking into consideration an economic trade-off between loss of spherical morphology/workability, cost of grinding, and final performance requirements. The aluminosilicate glass should preferably have a D₉₀ ranging from 5 to 500 µm, more preferred from 10 to 200 µm, most preferred from 25 to 90 µm.

The cement used according to the invention is Portland cement, i.e., ground Portland cement clinker containing a sulfate carrier and optionally up to 5 wt.-% minor constituents as allowed by standards like EN 197. To provide the Portland cement, commercially available OPC is used, or Portland cement clinker and sulfate carrier are provided with a suitable fineness and mixed or they are co-ground with each other and/or co-ground jointly or separately with one or more other components of the composite cement. Co-grinding can also serve to reduce the fineness in cases where the particle sizes of an available OPC or Portland cement clinker and/or sulfate carrier are considered too coarse. Sulfate carrier designates calcium sulfate as dihydrate, anhydrite or hemihydrate as well as other sulfates like phosphogypsum known per se and commonly used for cement. Portland cements with fineness adapted to the desired use in a manner known per se are suitable. A Portland cement typically has a D₉₀ ≤ 90 µm, preferably ≤ 60 µm and a slope n from 0.6 to 1.4, preferably from 0.7 to 1.2, determined by laser granulometry and calculated by the Rosin-Rammler model. Ordinary Portland cement normally consists of Portland cement clinker and calcium sulfate (or more rarely another sulfate carrier) ground in an amount such that the Portland cement has an SOs content (XRF) of at least 2.5 wt.-%, preferably at least 3.0 wt.-%, more preferred at least 3.5 wt.-% and usually not more than 8 wt.-%. Commercially available OPC usually contains up to 4 wt.-% SOs. This might result in less than the desired amount of SOs in the composite cement when the amount of Portland cement comprised in it is in the lower range of the preferred amounts like 35 to 40 or 50 wt.-%. The amount of SOs in the composite cement should range from 2 to 4 wt.-%, preferably from 2.5 to 3 or 3.5 wt.-%. Thus, it is envisaged to add extra sulfate carrier in case the Portland cement does not provide enough to reach those amounts. The Portland cement suitable according to the present invention may contain up to 5 wt.-% in total of one or more minor constituents. Minor constituents include GBFS, limestone, natural pozzolans, natural tempered pozzolans, siliceous fly ash, calcareous fly ash, and process dusts from cement manufacturing.

The third component of the composite cement according to the invention is calcium carbonate. Preferably, the calcium carbonate is limestone, dolomite, precipitated calcium carbonate or a mixture of two or all of them, especially limestone. The CaCOs content of the used calcium carbonate is typically at least 40 wt.-%, preferably at least 60 wt.-%, more preferred at least 75 wt.-%, and most preferred at least 90 wt.-%. Limestone and precipitated carbonate usually have a CaCOs content of ≥ 90 wt.-% or ≥ 95 wt.-% or ≥ 99 wt.-% or 100 wt.-%. Typically, the calcium carbonate is provided with a fineness D₉₀ ≤ 200 µm, preferably D₉₀ ≤ 125 µm.

The preferred amounts of Portland cement, calcium carbonate and aluminosilicate glass in the composite cement according to the invention are from 35 to 90 wt.-% Portland cement, preferably from 35 to 80 wt.-%, most preferred from 50 to 65 wt.-%
from 5 to 40 wt.-% calcium carbonate, preferably from 6 to 30 wt.-%, most preferred from 10 to 20 wt.-%
from 5 to 50 wt.-% aluminosilicate glass, preferably from 10 to 45 wt.-%, most preferred from 20 to 40 wt.-%
wherein naturally the sum of all components of one specific composite cement is always 100 wt.-%. Since further components in addition to Portland cement,
calcium carbonate and aluminosilicate glass are possible, their sum is less than 100 wt.-% when such further components are present.

The composite cement is obtained by blending Portland cement, calcium carbonate and aluminosilicate glass. Blending can occur in any way and device known as such. As mentioned, Portland cement can also be provided in the form of Portland cement clinker - ground to the desired fineness or to be co-ground - and sulfate carrier, the latter also with suitable fineness or to be ground or co-ground.

In one preferred embodiment, blending of at least two of the components is combined with their grinding. For example, Portland cement clinker is co-ground with calcium sulfate to provide the Portland cement and blended afterwards with separately ground calcium carbonate, especially limestone, and with the aluminosilicate glass. Alternatively, Portland cement clinker can be co-ground with calcium sulfate and calcium carbonate, especially limestone, to provide Portland cement and calcium carbonate and the ground mixture is subsequently blended with the aluminosilicate glass. Alternatively, Portland cement clinker can be co-ground with calcium sulfate and aluminosilicate glass, and blended with the calcium carbonate, especially with a separately ground limestone. In another embodiment, all components are co-ground. Grinding can be carried out using any suitable method or apparatus including, but not limited to, a ball mill, a roller mill, and a vertical roller mill.

Usual grinding aids can be used, especially amines like monoethanolamine, diglycolamine, diethanolamine, diisopropanolamine, methyldiethanolamine, triethanolamine, triisopropanolamine, and diethanolisopropanolamine.

In addition to Portland cement, calcium carbonate and aluminosilicate glass, the composite cement according to the invention or a hydraulically hardening building material made from it may and often will contain admixtures and/or additives. Admixtures and/or additives can be added - independently from each other - while blending the cement components and/or when using the composite cement to make the hydraulic building material, e.g., mortar or concrete or hydraulic road binder.

Also, one or more additional SCM, i.e., other than the pozzolan, can be used. Suitable are e.g., but not limited to, ground granulated blast furnace slag and other latent-hydraulic or pozzolanic slags, fly ashes both calcium rich and lean ones, burnt oil shale, natural pozzolans like volcanic ash and ground volcanic glass, artificial pozzolans, recycled concrete paste, carbonated recycled concrete paste, process dusts from cement clinker manufacturing like cement kiln dust, and mixtures thereof. Preferably no other SCMs or only low total amounts thereof are added, e.g., from 1 to 30 wt.-% with respect to the composite cement, preferably from 2 to 20 wt.-%.

Often used admixtures are water reducing agents and plasticizers like for example, but not exclusively, organic compounds with one or more functional group selected from carboxylate, sulfonate, phosphonate, phosphate, or alcohol. These serve to achieve a good consistency, i.e., flowability, of the paste with a smaller amount of water. Since a decrease of water/binder ratio normally provides an increase of strength, such admixtures are commonly used.

Air entraining agents are also able to improve flowability and can be used for this aim or for other reasons such as, but not limited to, density modifications, compactibility improvements etc. Useful air entraining agents are e.g., surface active substances, especially ones based on soaps from natural resins or synthetic nonionic and ionic surfactants.

Other admixtures that influence workability are retarders. They mainly aim at prolonging the time that a specified consistency is maintained. Retarders slow the setting and/or hardening of the binder paste. Suitable substances are for example, but not exclusively, phosphates, borates, salts of Pb, Zn, Cu, As, Sb, lignosulfonates, hydroxycarboxylic acids and their salts, phosphonates, sugars (saccharides).

It is also possible to add admixtures that are designed to modify the rheology properties, i.e., rheology modifiers like polycarboxylates, lignosulfonates, starch, Karoo gum, bentonite clay, polyvinyl alcohol, and mixtures thereof.

It is also possible to add admixtures that are designed to accelerate the evolution of the setting and/or of the compressive strength development. These can be, but are not limited to, alkali sulfates, alkali carbonates, alkali chlorides or alkali nitrates. In particular, an application of these accelerators combined with amines is beneficial. Suitable amines are for example, but not limited to, monoethanolamine, diglycolamine, diethanolamine, diisopropanolamine, methyldiethanolamine, triethanolamine, triisopropanolamine, and diethanolisopropanolamine. Especially preferred are triethanolamine, triisopropanolamine, and diethanolisopropanolamine. Application of other accelerators that are known in concrete technology is possible as well.

All admixtures are used in the amounts known as such, wherein the amount is adapted to a specific binder and special needs in the known manner.

Usual and useful additives are e.g., pigments, reinforcing elements, self-healing agents etc. All these can be added in the amounts known per se.

The composite cement according to the invention is useful for all applications where ordinary Portland cement and known composite cements are used, especially concrete, mortar, hydraulic road binder, and construction chemical products such as screed, tile adhesive etc.

Usually, aggregate and admixtures are added when making a hydraulically hardening building material like concrete or mortar from the composite cement according to the invention. The known aggregate and usual admixtures are used in the usual amounts. For construction chemical products like floor screed or tile adhesive, any necessary aggregate and admixture is typically added to the composite cement to form a dry mix, as far as possible. The aggregate and admixture are chosen depending on use in a manner well known per se.

For use, the composite cement is transformed into a hydraulically hardening building material, e.g., into mortar or concrete or hydraulic road binder, by mixing with water. Typically, a water to binder weight ratio (w/b) from 0.1 to 1, preferably from 0.20 to 0.75, and more preferred from 0.35 to 0.65 is used.

The invention will be illustrated further with reference to the examples that follow, without restricting the scope to the specific embodiments described. The invention includes all combinations of described and especially of preferred features that do not exclude each other.

If not otherwise specified, any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit. The term "substantially free" means that a particular material is not purposefully added to a composition and is only present in trace amounts or as an impurity. As used herein, unless indicated otherwise, the term "free from" means that a composition does not comprise a particular material, i.e., the composition comprises 0 weight percent of such material.

### Example 1

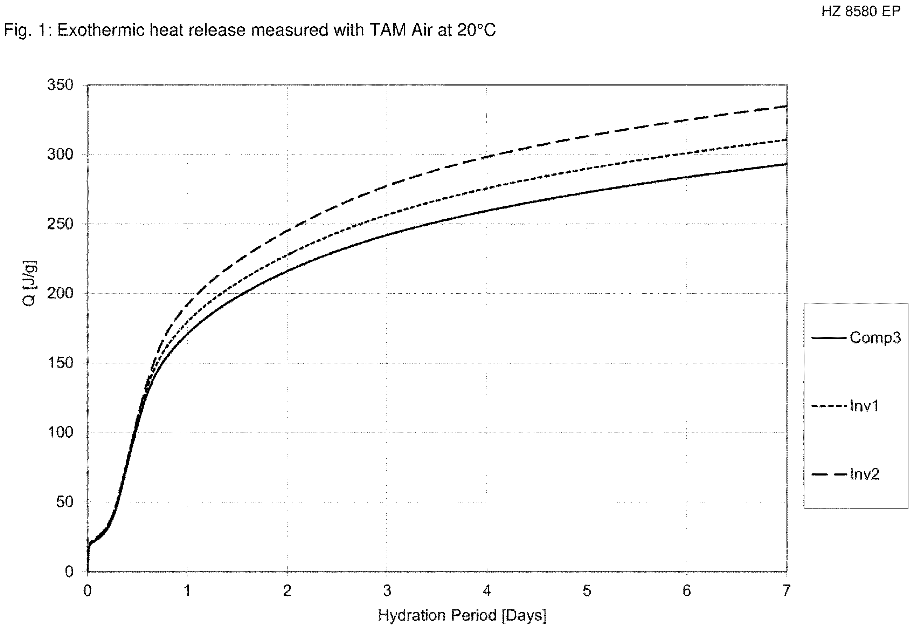

An aluminosilicate glass was produced by melting and rapid cooling of quarry fines. As Portland cement, a CEM 142.5 R from HeidelbergCement AG with a particle size distribution having a Rosin Rammler slope n = 0.89, and a D₉₀ = 42 µm was provided. As calcium carbonate, a limestone filler having CaCOs content of 96 wt.% and a particle size distribution with a Rosin Rammler slope n = 0.71, and a D₉₀ = 121 µm was used. Paste samples Inv 1 and Inv 2 were made with the amounts of Portland cement, limestone, and aluminosilicate glass in wt.-% listed in table 1 at a water/powder ratio of 0.50. The samples were made in a calorimeter TAM Air at 20 °C to measure the heat released during hardening. For comparison, a sample Comp3 was made wherein the composite cement contained no calcium carbonate. The measured total specific heat per g of combined amount of Portland cement and aluminosilicate glass is shown in figure 1 and also listed in table 1.

**Table 1: Exothermic heat release measured with TAM Air at 20°C**

| sample | Portland cement | aluminosilicate glass | limestone | Specific total heat in J/g after | | | |
|---|---|---|---|---|---|---|---|
| | | | | 8 hours | 24 hours | 3 days | 7 days |
| Inv1 | 65% | 29% | 6% | 60 | 179 | 256 | 310 |
| Inv2 | 65% | 23% | 12% | 59 | 192 | 277 | 335 |
| Comp3 | 65% | 35 % | none | 58 | 171 | 242 | 293 |

The comparison shows the beneficial effect of combining the aluminosilicate glass with CaCOs, namely the exothermal reaction, expressed as specific heat flow. The clinker content is in all mixes the same, and by replacing a part of the reactive aluminosilicate glass by not hydrating limestone, the specific heat flow increased. Since no energy is required for the production of limestone except for drying and grinding, this substitution saves energy and reduces the ecological footprint.

### Example 2

Mortar samples were made according to EN 196-1 from the composite cement samples from example 1 with a weight ratio cement:sand = 1:3 and at a water/powder ratio = 0.50. In addition, a mortar from the Portland cement without addition of calcium carbonate or aluminosilicate glass was made. The compressive strength was measured according EN 196-1. The results are shown in table 2.

**Table 2: Compressive strength measured according to EN 196-1**

| sample | Portland cement | aluminosilicate glass | limestone | Compressive strength in MPa after | | | | increase from 7^{th} to 28^{th} day |
|---|---|---|---|---|---|---|---|---|
| | | | | 1 day | 2 days | 7 days | 28 days | |
| Inv1 | 65% | 29% | 6% | 13.6 | 19.5 | 28.1 | 42.7 | + 14.6 MPa |
| Inv2 | 65% | 23% | 12% | 12.5 | 19.6 | 27.0 | 37.9 | + 10.9 MPa |
| Comp3 | 65% | 35% | none | 13.5 | 19.7 | 25.9 | 34.4 | + 8.5 MPa |
| Comp4 | 100 % | none | none | 25.6 | 34.6 | 41.8 | 52.3 | + 10.5 MPa |

This example shows the beneficial effect of combining the aluminosilicate glass with CaCOs, namely from the 7^{th} day onwards, the strengths of the samples Inv1 and Inv2 are higher than that of the sample Comp3. In addition, the strength increase between 7 and 28 days is significantly higher for Inv1 and Inv2 when compared to Comp3, and Inv2 still shows a slightly higher strength gain than OPC in Comp4.

## Claims

1. Composite cement comprising a Portland cement, a calcium carbonate, and an aluminosilicate glass, wherein the aluminosilicate glass is obtained by melting an aluminosilicate quarry dust in a furnace at a temperature from 1000 to 1800 °C with subsequent rapid quenching.

2. Composite cement according to claim 1, wherein the quarry dust is screenings, settling pond fines or baghouse fines from mining igneous rock, preferably granitic rocks, basaltic rocks, and feldspar.

3. Composite cement according to claim 1 or 2, wherein the aluminosilicate glass has an XRD amorphous content of at least 66 wt.-%, preferably at least 80 wt.-%, most preferred at least 90 wt.-%.

4. Composite cement according to any one of claims 1 to 3, wherein the calcium carbonate is limestone, dolomite, precipitated CaCOs or mixtures thereof, preferably limestone.

5. Composite cement according to any one of claims 1 to 4, wherein the calcium carbonate comprises at least 40 wt.-%, preferably at least 60 wt.-%, more preferred at least 75 wt.-%, and most preferred at least 90 wt.-% CaCOs, and/or has a fineness of D₉₀ ≤ 200 µm, preferably D₉₀ ≤ 125 µm.

6. Composite cement according to any one of claims 1 to 4, wherein the composite cement comprises
from 35 to 90 wt.-% Portland cement, preferably from 35 to 80 wt.-%, most preferred from 50 to 65 wt.-%
from 5 to 40 wt.-% calcium carbonate, preferably from 6 to 30 wt.-%, most preferred from 10 to 20 wt.-%
from 5 to 50 wt.-% aluminosilicate glass, preferably from 10 to 45 wt.-%, most preferred from 20 to 40 wt.-%.

7. Method for manufacturing a composite cement comprising the steps
- providing Portland cement,
- providing calcium carbonate,
- manufacturing an aluminosilicate glass by melting an aluminosilicate quarry dust in a furnace at a temperature from 1000 to 1800 °C with subsequent rapid quenching,
- blending the Portland cement with the calcium carbonate and the aluminosilicate glass.

8. Method according to claim 7, wherein the Portland cement has an SOs content, measured by XRF analysis, above 2.5 wt.-%, preferably above 3.0 wt.-%, most preferred at least 3.5 wt.-%, and preferably up to 8 wt.-%.

9. Method according to claim 7 or 8, wherein the Portland cement is provided by co-grinding a Portland cement clinker with a sulfate carrier, preferably calcium sulfate, and is blended subsequently with separately ground calcium carbonate and with the aluminosilicate glass.

10. Method according to claim 7 or 8, wherein a Portland cement clinker is co-ground with a sulfate carrier, preferably calcium sulfate, and calcium carbonate to provide the Portland cement and the calcium carbonate and those are subsequently blended with the aluminosilicate glass.

11. Method according to claim 7 or 8, wherein a Portland cement clinker is co-ground with a sulfate carrier, preferably calcium sulfate, and the aluminosilicate glass and blended with the calcium carbonate.

12. Method according to claim 7 or 8, wherein a Portland cement clinker, a sulfate carrier, the calcium carbonate, and the aluminosilicate glass are co-ground.

13. Method according to any one of claims 7 to 12, wherein the aluminosilicate quarry dust is molten at a temperature from 1400 to 1700 °C and/or the rapid quenching comprises reducing the temperature at a rate from 10² K/sec. to 10⁶ K/sec. to below the glass transition temperature of the aluminosilicate glass, preferably at a rate of > 10^{3.5} K/sec.

14. Method according to any one of claims 7 to 13, wherein the quarry dust is produced during crushing and washing operations as screenings, settling pond fines, and/or baghouse fines.

15. Method according to any one of claims 7 to 14, wherein a composition of the quarry dust is adjusted by mixing dusts from two or more quarries, different kinds of dusts from one quarry or different quarries like screenings with settling pond fines, and mixing dusts from one quarry in an intermediate storage to compensate for changes in composition over time and/or by adding a fluxing material.

16. Method according to any one of claims 7 to 15, wherein the aluminosilicate quarry dust has at least 50 wt.-%, or at least 60 wt.-%, or at least 70 wt.-%, or at least 80 wt.-%, or at least 90 wt.-% crystalline solids and/or the combined content of Al₂O₃ and SiO₂ with respect to the total aluminosilicate quarry dust weight is at least 20 wt.-% or at least 25 wt.-% or at least 30 wt.-% or at least 35 wt.-% or at least 40 wt.-% or at least 45 wt.-% or at least 50 wt.-% or at least 55 wt.-% or at least 60 wt.-% or at least 65 wt.-% or at least 70 wt.-% or at least 75 wt.-% or at least 80 wt.-% or at least 85 wt.-% and/or the aluminosilicate quarry dust comprises at least 1 wt.-% or at least 3 wt.-% or at least 4 wt.-% or at least 5 wt.-% or at least 6 wt.-% or at least 7 wt.-% or at least 8 wt.-% or at least 10 wt.-% or at least 12 wt.-% or at least 15 wt.-% or at least 20 wt.-% Na₂O and/or K₂O and/or the sum of CaO and MgO is not more than 20 wt.-% or not more than 15 wt.-% or not more than 10 wt.-% or not more than 8 wt.-% or not more than 7 wt.-%.
